# EUROPEAN PATENT SPECIFICATION

(11) **EP 2 455 647 B1**
(45) Date of publication and mention of the grant of the patent: **04.05.2022**
(21) Application number: 11008501.6
(22) Date of filing: 21.10.2011
(51) Int. Cl.: B05D 5/06, B05D 7/00, F16L 55/11, F16L 55/115

(54) **A device for fastening closure plugs for fluid conducting members**
Vorrichtung zur Befestigung von Verschlussstopfen für Fluidleitungselemente
Dispositif de fixation de bouchons de fermeture pour éléments de conduction de fluides

(30) Priority: 21.10.2010 IT MI20100320
(43) Date of publication of application: 23.05.2012
(73) Proprietor: Greiner S.p.A., 25065 Lumezzane (BS) (IT)
(72) Inventor: LENA, Roberto, 25065 Lumezzane (BS) (IT); ASTORI, Giorgio Mario, 25065 Lumezzane (BS) (IT)
(74) Representative: Marietti, Andrea

(56) References cited:
- DE-A1- 3 042 839
- US-A- 3 124 267
- US-A- 5 524 779

## Description

The present invention concerns a device for fastening closure plugs of fluid conveying members against undue loosening after assembling.

It should be immediately noticed that with fluid conveying members it is intended every elements available on the market used for blocking up a hole or stopping the fluid flow in a pipe, from an ending portion thereof, or fittings, valves, reducers, and similar, provided with at least one threaded portion of male or female type.

As a consequence, also if hereinafter it will be made explicitly reference to pipe plugs, the security device according to the present invention may be applied also to plugs for closing valves, fittings, reducers and so on, having at least one threaded portion adapted to cooperate with the corresponding threaded portion of the plug.

In addition, the security device may be used with plugs for conveying fluid members used in different applications, both for civilian and industrial use, such as for example the pipes for water or gas supply.

At the present time the plugs used in equipments, such as for example for supplying gas or water, are not effectively protected against possible tampering, in fact their undesirable loosening is avoided by the application of seal wires with a corresponding security lead seal, or with the aid of a double open ring, made of plastic material, which is applied on the plug head and has to be broken for rotatably activating the plug.

In some case security caps are used, made of metallic material, which are subsequently assembled on the plug to be secured, and which do not allow the access to the plug head then preventing the rotatably activation thereof. Particularly, these caps are assembled on the plug after the latter has been tightened to the pipe, so that to prevent a not authorized person, or prowler, to loosen the plug, thereby causing the fluid leak.

The caps at the moment available on the market have an open ring shape to allow their mounting on the activating head of the plug, and usually they have two connectable parts subsequently blocked in position on the activating head of the plug by constraining means adapted for determining the ring closure.

More in detail, caps are provided with two or more slots protruding from the outer surface of the cap in which a bolt is tightened, or similar means, constraining the plug cap thereby preventing the undesirable activation thereof.

The locking screw has a head shaped so that it cannot be activated by common tools, in other words, it is not possible to take away the plug cap if not after the use of a special tool that is able to loosen the screw locking the plug cap. These security devices, known in the art, suffer from some drawbacks mainly due to the presence of slots or protruding parts from the surface of the cap itself. As a matter of fact, often the cap mounting is carried out in very small spaces, next to walls limiting the space for the fitter carrying out the work.

For this reason, it is very difficult to mount the caps actually available because it is not always easy to dispose the slots in a position the fitter would access easily for mounting the locking screw.

Document US 5 524 779 describes a safety closure with locking means and an attached key for closing containers containg prescrption medicines and the like. Said safety closure provides for an outer closure member and an inner cylinder having a diameter that is smaller than the diameter of the outer closure member. The outer closure member is suitable to avoid access to the inner cylinder. Moreover, the outer closure member may freely rotate wth respect to the inner cylinder, avoiding the unscrewing of this latter element.

A key having a tab is permanently mounted in the outer closure member. The tab may engage in a slot of the the top wall of the inner cylinder.

The key does not have any threaded portion.

Document US 3 124 267 a method and means for sealing containers.

In particular, a tamper-proof disk is placed in order to block access to an activating head of a plug, the plug having plug lugs having plug recesses.

The tamper-proof disk is proportioned to closely fit within the plug recess and is adapted to be flush with the exterior of the plug when it is seated upon the respective plug lugs.

In fact, projecting from the disk surface facing the plug, are structurally integral projections that can cooperate with respective lug recesses.

Faucet handles where the handles are coupled to the plug via a grooved portion, locking the handle and the plug in rotation are e.g. known from US4134420 and US2622839.

Object of the present invention is to provide a device for fastening plugs of conveying fluid members against undue loosening that overcomes the problems of the known art and that are able to be mounted easily also in presence of limited spaces, and at the same time they guarantee the highest security against the undesirable activation of the plug.

Further object of the present invention is to provide a security device for plugs provided with direct constraining means of the plug cap, at the same time allowing the rotation of the cap with respect to the plug.

These and other objects are obtained by a security device according to claim 1 and the following dependent claims.

The device for fastening closure plugs of conveying fluid members against undue loosening after mounting, according to the present invention, comprises a security cap adapted for preventing the undesirable access to the activating head of the plug and it comprises means for rotatably constraining the cap on the plug, the means being fixed directly to the plug.

As afore mentioned, the members for conveying fluids on which the cap secured by the device according to the present invention is mounted, comprise pipes, valves, fittings, reducers and so on, provided with at least one screwed portion. It has to be noticed as well that with the expression "to rotatably constrain" it is intended an axial constrain allowing the relative rotation of the cap with respect to the plug.

As a matter of fact, thanks to the constraining means the security device is provided with, according to the present invention, after the cap has been mounted, the rotation movement of the cap with respect to the plug is allowed on the latter, but the relative axial slide is prevented, thereby avoiding the cap to be taken off from the activating head of the cap to be secured.

Advantageously, the constrain of rotating type, prevents the cap from being unduly used to loosen the tightening on the pipe by contact with the cap, once installed.

The cap comprises one or more holes allowing the passage of constraining means to allow the plug locking.

Advantageously, according to an aspect of the present invention, the constraining means allow the direct fixing of the cap to the activating head of the plug thereby simplifying substantially the mounting steps of the cap on the plug pulling down times and costs.

According to the invention, the means for rotatably constraining the cap on the plug comprise at least one screw provided with a threaded portion for the direct fixing to the cap, and an activating head provided with a special shape adapted for being activated by an appropriate tool provided with a head of complementary shape.

So the cap could be constrained and/or taken away from the plug by authorized personnel only, thereby preventing its undue activation.

According to a preferred embodiment, the screw comprises an activating head with a conical shape adapted for being rotatably activated by an appropriate tool provided with a head of complementary shape, preferably by conical left-hand wrench.

Further, the screw the device is provided with, according to the present invention, comprises at least one smooth portion to allow the rotation of the cap with respect to the plug, after the cap has been mounted on the plug by a direct fixing of the screw.

Particularly, according to a possible embodiment, when the cap is constrained to the plug by a screw, the smooth portion of the screw is disposed next to at least one through hole of the cap to allow the rotation of the latter with respect to the cap.

Further it has to be noticed that, when the cap is constrained to the plug by means of the fixing screw, the latter is completely housed inside the cap, and particularly inside the housing portion it is provided with.

The security device comprises, as well, means for protecting the locking screw of the cap to the plug from the action of atmospheric agents or seepage of outer bodies, and according to a preferred embodiment, it is provided with a lid closing and preventing the access to the housing portion of the cap wherein, as afore said, the screw is disposed.

Further, the security device according to the present invention is particularly convenient from the production and application point of view.

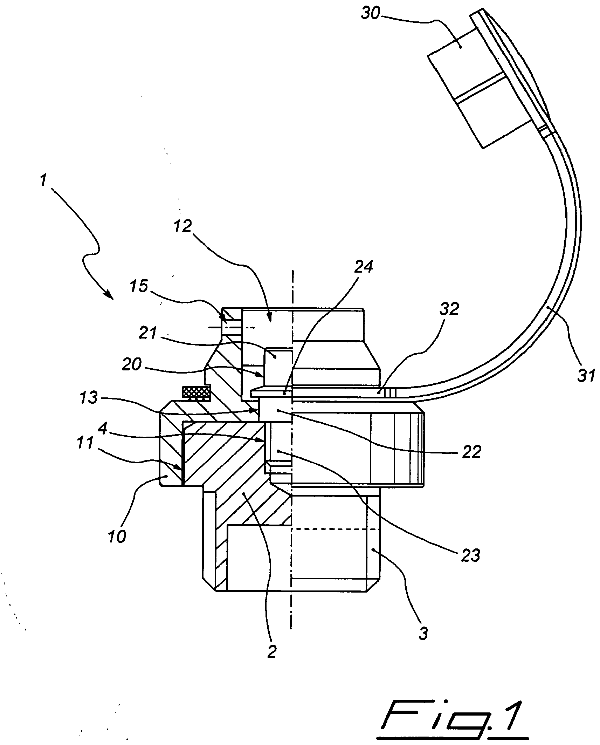

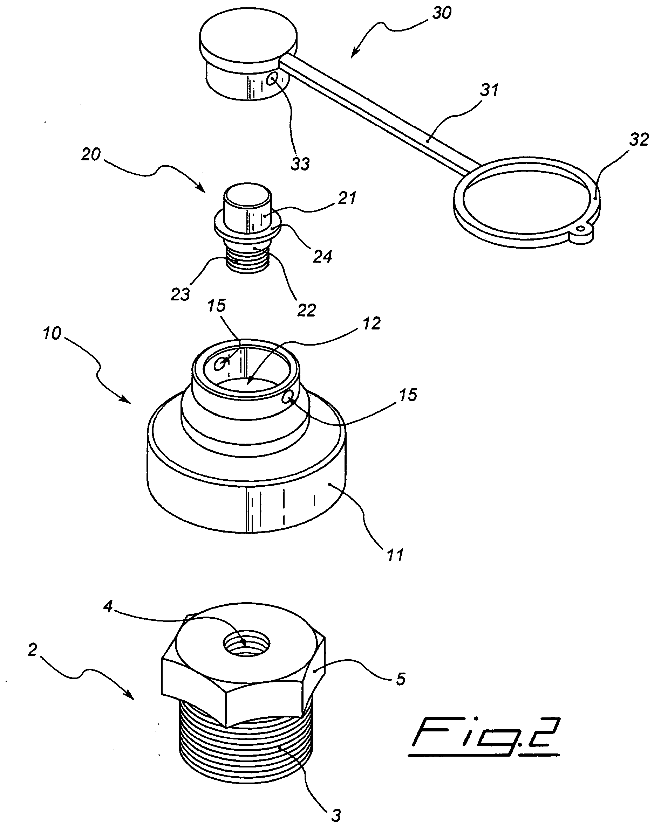

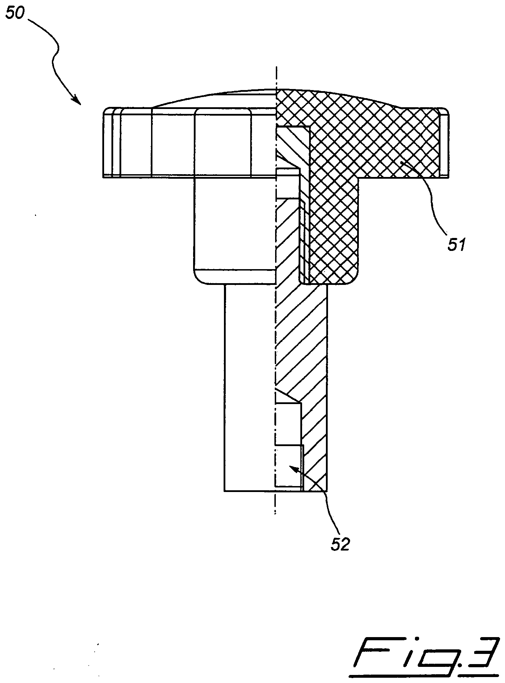

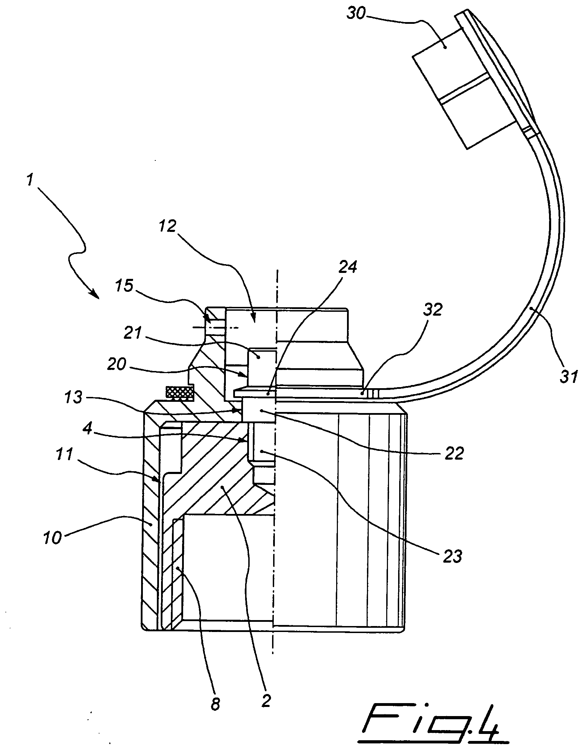

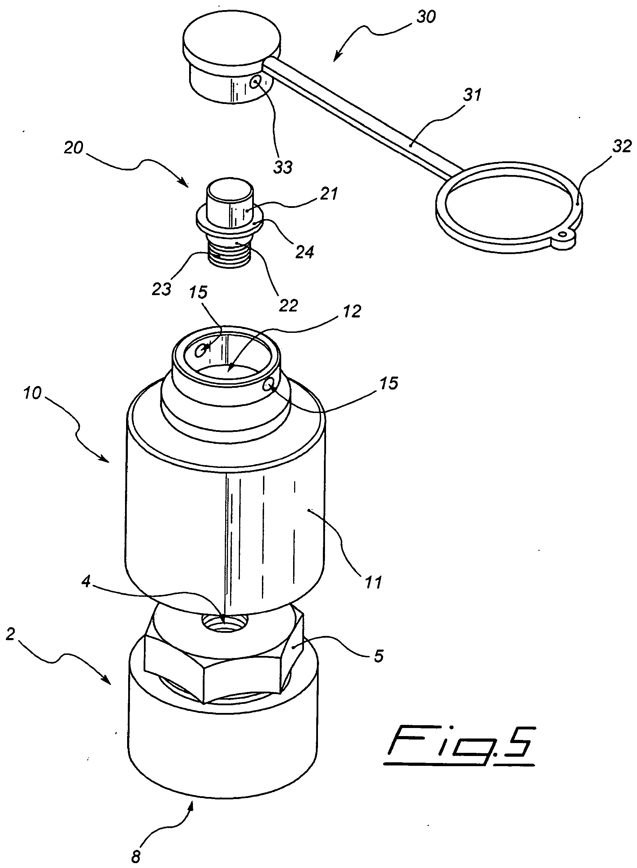

These and other advantages of the present invention will be evident from the following description, provided for illustrative and not limitative purposes, and the enclosed drawings, wherein:
∘ figure 1 is a partially sectioned view of the security device according to the present invention mounted on a plug provided with a screw of male type;
∘ figure 2 is an exploded view of the components of the security device according to the present invention mounted on a plug provided with a screw of male type;
∘ figure 3 shows a tool able to be used for mounting the security device according to the present invention;
∘ figure 4 is a partially sectioned view of the security device according to the present invention mounted on a plug provided with a screw of female type;
∘ figure 5 is an exploded view of the components of the security device according to the present invention mounted on a plug provided with a screw of female type.

As can be seen in the appended figures, the device 1 for fastening closure plugs of members for conveying fluids against the undue loosening after assembling, according to the present invention, comprises a security cap 10 adapted for preventing the undesirable access to the activating head 5 of the plug 2, and means 20 for rotatably constraining the cap 10 on the plug 2.

Also if hereinafter it will be explicitly referred to plugs for pipes, the security device according to the present invention may be applied also to closure plugs of different conveying fluid members such as, for example, valves, fittings, reducers and so on, provided with at least one threaded portion of male or female type. In addition, according to the type of screw-thread the conveying fluid member is provided with, the closure plug will be provided with a complementary screw-thread of male or female type.

Figures 1 and 2 show a security device according to the present invention mounted on the plug 2 provided with a screw-thread of male type 3, usually intended for closing valves, fittings and similar, provided with a screw-thread of female type.

On the contrary, figures 4 and 5 show the security device according to the present invention, mounted on a plug 2 provided with a screw-thread of female type 8, intended for engaging a corresponding screw-thread of male type of which, for example, the end portions of pipes are provided with, etc.

As will be described later with more detail, the constraining means 20 are fixed directly to the plug 2 during the mounting of the cap 10 on it.

As afore said, the constraining means 20 allow to rotatably fix the cap 10 to the plug 2, in other words the constraining means are able to block the axial movement between the cap and the plug, at the same time allowing the rotation of the first element with respect to the second.

The cap 10, preferably made in one piece and of metallic material, is shaped so that to comprise a hollow portion 11, intended for housing the activating head 5 of the cap 2 to be secured.

As shown in figure 1, after the cap 10 has been blocked on the plug 2, the activating head 5 cannot be accessed from the outside both manually and by tools commonly used to tighten the plug 2 on the pipe, not shown in appended figures.

The cap 10 further comprises an housing portion 12 for the constraining means 20 and at least one hole 13 allowing the passage of the constraining means 20 through it.

As a matter of fact, the constraining means 20 allow to rotatably constrain the cap 10 on the plug 2 by their direct blocking on the plug.

According to the present invention, the means for rotatably constraining the cap 10 to the plug 2 comprise a screw.

The screw 20 is provided with at least one threaded portion 23 for the direct fixing to the plug 2. More in detail, the threaded portion 23 of the screw engages a corresponding threaded hole 4 obtained on the plug 2 and preferably at the upper surface of the activating head 5.

The screw 20 is provided as well with a smooth portion 22 allowing the free rotation of the cap 10 with respect to the plug 2 when the cap is assembled to the plug to be secured against undue loosening.

As shown in the appended figures, the screw 20 further comprises an activating head 21 allowing the assembling thereof on the plug 2, and a flat portion 24 positioned between the head 21 and the smooth portion 22.

The head 21 is shaped to exhibit a special form, not able to be activated by common tool, but able to be activated only by an appropriate tool provided with a head of complementary shape with respect that the screw is provided with.

Obviously the security device could be provided with constraining means able to be activated by tools commonly available on the market, for example a screw provided with a standard head.

According to a preferred embodiment, the head 21 has a conical shape and it engages a special tool, or activating wrench 50, allowing the fixing and the removal thereof on/from the plug 2.

Figure 3 shows a possible embodiment of the wrench 50 which can be used for activating the screw 20 of the device according to the present invention.

The wrench 50 has a shaped handgrip 51 and a stem provided with an ending portion with a conical shape 52 intended for engaging the head 21 of the screw 20 having a conical shape too.

The rotatably activation of the screw 20 happens because of the friction present between the two conical surfaces of the screw head and the wrench contacting one to another.

It has to be noticed that to increase the friction coefficient between the two surfaces, one of them, or both, could be provided with a threaded portion. According to a preferred embodiment, the conical surface 52 of the wrench 50 is provided with a left-hand fine-pitch screw-thread, whereas the conical surface of the head 21 of the screw is smooth. The screw-thread allows to increase the friction between the two surfaces, with the conical surface 52 of the wrench 50 "grasping" the conical surface of the head 21 of the screw.

Obviously such an effect is accentuated the finer is the thread the screw is provided with, and the stronger the material, of which the wrench is made of, is, with respect to the material of which the screw is made of.

Advantageously, the presence of a head 21 able to be activated only by a special tool, allows to carry out the assembling and removal of the cap 10 on/from the plug 2 only by authorized personnel.

During the assembling, the screw 20 is passed inside the housing portion 12 of the cap 10 and subsequently through the through hole 13.

The fitter proceeds then to block the cap 10 on the plug 2 by the special tool placed in an engagement position with the activating head 21 of the screw 20. Advantageously, when the screw 20 is tightened on the plug 2, it is completely housed inside the housing portion 12 of the cap 10.

Further, when there are no slots, or portions protruding outwards from the cap surface, it allows to block rapidly and easily the screw 20 on the plug 2 so that to rotatably constrain the cap on the plug 2.

More in detail, the through hole 13 the cap 10 is provided with, is realized so that to exhibit a greater diameter than the stem of the screw 20 and particularly of its screw portion 23 and its smooth portion 22, and at the same time a smaller diameter than its head 21, or than the flat portion 24 between the head 21 and the smooth portion 22.

In addition, as can be seen in the section view of figure 1, the smooth portion 22 of the screw 20 has a greater height than the thickness of the portion of the cap 10 in which the through hole 13 is obtained.

Doing so, when the screw 20 is fixed to the plug 2, the head 21 of the screw, or its flat portion 24, is not contacting the surface of the cap 10 at the hole 13, allowing to realize a rotating constrain between the cap and the plug which permits the relative rotation of the cap with respect to the latter.

The security device, according to the present invention, also comprises means 30 for protecting the constraining means 20 of the cap 10 to the plug 2, for example from the atmospheric agents or intrusion of outer bodies.

According to a preferred embodiment, the device is provided with a lid 30 closing and preventing the access into the housing portion 12 of the cap 10 in which the screw 20 is disposed, as afore mentioned.

According to a possible embodiment, the lid 30 is constrained to the cap 10 by a collar 32 housed in an appropriate seat obtained on the outer surface of the cap 10.

The collar 32 is connected to the lid 30 by a tab 31, preferably made of flexible material.

In addition, when the lid 30 is mounted on the cap 10, it is constrained to the latter by a security seal, preferably composed of a wire and a respective lead seal mounted in appropriate holes (33, 15) of which the lid 30 and the cap 10 are provided with.

More in detail, the security seal is passed through the through holes 15 of the cap 10 and the through holes 33 of the lid 30 so that to impede the access to the constraining means 20 of the plug cap from the outside.

Doing so, the screw 20, housed inside the portion 12 of the cap 10, cannot be accessed from the outside if not after the seal retaining the lid 30 of the cap 10 has been broken.

As afore said, figures 4 and 5 show respectively a partially sectioned view and an exploded view of the components of the security device according to the present invention mounted on a plug 2 provided with a screw of female type 8. As can be easily verified with the aid of figures 4 and 5, for which the same numbering of figures 1 and 2 has been maintained, the components of the security device, its operation and its assembling method are similar to those afore described referring to figures 1 and 2 for the device intended for the installation on plug provided with male thread 3.

As mentioned, the difference is in the different shape of the plug 2 provided with a thread of female type 8, intended for closing the members conveying fluids provided with at least one corresponding threaded portion of male type, such as for example the ending portion of a pipe.

## Claims

1. Device for fastening closure plugs (2) of conveying fluid members against undue loosening after assembling, of the type comprising a security cap (10) adapted for preventing the undesirable access to the activating head (5) of said plug (2), and comprising means (20) for rotatably constraining said cap (10) on said plug (2), said constraining means being for being fixed directly to said plug so that, after the cap has been mounted, the rotation movement of the cap with respect to the plug is allowed on the latter, but the relative axial slide is prevented, wherein said means for rotatably constraining said cap to said plug comprise at least one screw (20) provided with at least a threaded portion (23) for being directly fixed to said plug (2), wherein said at least one screw (20) comprises at least one activating head (21) provided with a special shape adapted for being activated by an appropriate tool (50) provided with a head of complementary shape.

2. Device according to claim 1, wherein said cap (10) comprises at least one hole (13) for the passage of said constraining means (20).

3. Device according to claim 1, wherein said activating head (21) of said at least one screw (20) has a conical shape.

4. Device according to claim 1, **characterized in that** said at least one screw (20) comprises at least a smooth portion (22) for allowing the rotation of said cap (10) with respect to said plug (2) when said cap is constrained to said plug and said at least one screw is fixed directly to said plug.

5. Device according to claim 4, wherein said at least one smooth portion (22) of said screw (20) is disposed next to at least one hole (13) of said cap (10) to allow the rotation of said cap with respect to said plug when said cap is constrained to said plug and said at least one screw is fixed directly to said plug.

6. Device according to claim 1, wherein said at least one screw (20) is completely housed inside said cap (10) when said cap is constrained to said plug (2) and said at least one screw is fixed directly to said plug, said cap comprising at least one portion (12) for housing at least part of said screw.

7. Device according to claim 6, wherein the head (21) of said at least one screw (20) is disposed inside said portion (12) for housing said cap (10), when said cap is constrained to said plug and said at least one screw is fixed directly to said plug.

8. Device according to claim 1, **characterized by** comprising means for protecting said at least one screw.

9. Device according to the claims 6 and 8, wherein said means for protecting said at least one screw comprise at least one lid (30) for closing said portion (12) for housing said cap (10).

10. Device according to claim 9, wherein said lid (30) comprises at least one through hole (33) for the passage of a security seal adapted to avoid the possible removal of the lid (30) from the cap (10), said cap (10) being provided with at least one through hole (15) disposed in a position corresponding to said at least one through hole (33) of said lid (30).

11. Device according to any one of the preceding claims, wherein said cap (10) is made in one piece.

12. Device according to any one of the preceding claims, wherein said cap (10) is not deformable.

## Patentansprüche

1. Vorrichtung zum Befestigen von Verschlussstopfen (2) von Fluidförderteilen gegen unzulässiges Lösen nach dem Zusammenbau der Art, dass sie eine Sicherheitskappe (10) aufweist, die so angepasst ist, dass sie den unerwünschten Zugang zum Aktivierungskopf (5) des Stopfens (2) verhindert, und aufweisend Mittel (20) zum drehbaren Festhalten der Kappe (10) an dem Stopfen (2), wobei das Festhaltemittel zum direkten Festhalten des Stopfens derart ist, dass, nachdem die Kappe befestigt ist, die Drehbewegung der Kappe in Bezug auf den Stopfen auf dem letzteren erlaubt ist, jedoch das relative axiale Gleiten verhindert ist, wobei das Mittel zum drehbaren Festhalten der Kappe an dem Stopfen mindestens eine Schraube (20) aufweist, die mit mindestens einem Gewindeabschnitt (23) versehen ist, um direkt an dem Stopfen (2) befestigt zu werden, wobei die mindestens eine Schraube (20) mindestens einen Aktivierungskopf (21) aufweist, der mit einer speziellen Form versehen ist, die angepasst ist, um durch ein geeignetes Werkzeug (50) aktiviert zu werden, das mit einem Kopf von komplementärer Form versehen ist.

2. Vorrichtung nach Anspruch 1, wobei die Kappe (10) mindestens ein Loch (13) für den Durchgang des Festhaltemittels (20) aufweist.

3. Vorrichtung nach Anspruch 1, wobei der Aktivierungskopf (21) der mindestens einen Schraube (20) eine konische Form hat.

4. Vorrichtung nach Anspruch 1, **dadurch gekennzeichnet, dass** die mindestens eine Schraube (20) mindestens einen glatten Abschnitt (22) aufweist, um die Drehung der Kappe (10) in Bezug auf den Stopfen (2) zu ermöglichen, wenn die Kappe an den Stopfen gezwungen ist und die mindestens eine Schraube direkt an dem Stopfen befestigt ist.

5. Vorrichtung nach Anspruch 4, wobei der mindestens eine glatte Abschnitt (22) der Schraube (20) neben mindestens einem Loch (13) der Kappe (10) angeordnet ist, um die Drehung der Kappe in Bezug auf diesen Stopfen zu ermöglichen, wenn die Kappe an den Stopfen gezwungen ist und die mindestens eine Schraube direkt an dem Stopfen befestigt ist.

6. Vorrichtung nach Anspruch 1, wobei die mindestens eine Schraube (20) vollständig in der Kappe (10) untergebracht ist, wenn die Kappe an den Stopfen (2) gezwungen ist und die mindestens eine Schraube direkt an dem Stopfen befestigt ist, wobei die Kappe mindestens einen Abschnitt (12) zum Aufnehmen mindestens eines Teils der Schraube aufweist.

7. Vorrichtung nach Anspruch 6, wobei der Kopf (21) der mindestens einen Schraube (20) innerhalb des Abschnitts (12) zum Aufnehmen der Kappe (10) angeordnet ist, wenn die Kappe an den Stopfen gezwungen ist und die mindestens eine Schraube direkt an dem Stopfen befestigt ist.

8. Vorrichtung nach Anspruch 1, **dadurch gekennzeichnet, dass** sie Mittel zum Schützen der mindestens einen Schraube aufweist.

9. Vorrichtung nach den Ansprüchen 6 und 8, wobei das Mittel zum Schützen der mindestens einen Schraube mindestens einen Deckel (30) zum Verschließen des Abschnitts (12) zum Aufnehmen der Kappe (10) aufweist.

10. Vorrichtung nach Anspruch 9, wobei der Deckel (30) mindestens ein Durchgangsloch (33) für den Durchgang eines Sicherheitssiegels aufweist, das angepasst ist, um das mögliche Entfernen des Deckels (30) von der Kappe (10) zu verhindern, wobei die Kappe (10) mit mindestens einem Durchgangsloch (15) versehen ist, das in einer Position angeordnet ist, die dem mindestens einen Durchgangsloch (33) des Deckels (30) entspricht.

11. Vorrichtung nach einem der vorhergehenden Ansprüche, wobei die Kappe (10) aus einem Stück hergestellt ist.

12. Vorrichtung nach einem der vorhergehenden Ansprüche, wobei die Kappe (10) nicht verformbar ist.

## Revendications

1. Dispositif de fixation de bouchons de fermeture (2) d'éléments de fluide de transport contre un desserrage indu après assemblage, du type comprenant un capuchon de sécurité (10) adapté pour empêcher l'accès indésirable à la tête d'actionnement (5) dudit bouchon (2), et comprenant des moyens (20) pour contraindre en rotation ledit capuchon (10) sur ledit bouchon (2), lesdits moyens de contrainte étant destinés à être fixés directement audit bouchon de sorte que, après que le capuchon a été monté, le mouvement de rotation du capuchon par rapport au bouchon est autorisé sur ce dernier, mais le glissement axial relatif est empêché, dans lequel lesdits moyens pour contraindre de manière rotative ledit capuchon audit bouchon comprennent au moins une vis (20) munie d'au moins une partie filetée (23) pour être fixée directement audit bouchon (2), dans lequel ladite au moins une vis (20) comprend au moins une tête d'actionnement (21) munie d'une forme spéciale adaptée pour être activée par un outil approprié (50) muni d'une tête de forme complémentaire.

2. Dispositif selon la revendication 1, dans lequel ledit capuchon (10) comprend au moins un trou (13) pour le passage desdits moyens de contrainte (20).

3. Dispositif selon la revendication 1, dans lequel ladite tête d'actionnement (21) de ladite au moins une vis (20) présente une forme conique.

4. Dispositif selon la revendication 1, **caractérisé en ce que** ladite au moins une vis (20) comprend au moins une portion lisse (22) pour permettre la rotation dudit capuchon (10) par rapport audit bouchon (2) lorsque ledit capuchon est contraint audit bouchon et que ladite au moins une vis est fixée directement audit bouchon.

5. Dispositif selon la revendication 4, dans lequel ladite au moins une portion lisse (22) de ladite vis (20) est disposée à côté d'au moins un trou (13) dudit capuchon (10) pour permettre la rotation dudit capuchon par rapport audit bouchon lorsque ledit capuchon est contraint audit bouchon et ladite au moins une vis est fixée directement audit bouchon.

6. Dispositif selon la revendication 1, dans lequel ladite au moins une vis (20) est complètement logée à l'intérieur dudit capuchon (10) lorsque ledit capuchon est contraint audit bouchon (2) et que ladite au moins une vis est fixée directement audit bouchon, ledit capuchon comprenant au moins une portion (12) de logement d'au moins une partie de ladite vis.

7. Dispositif selon la revendication 6, dans lequel la tête (21) de ladite au moins une vis (20) est disposée à l'intérieur de ladite portion (12) de logement dudit capuchon (10), lorsque ledit capuchon est contraint audit bouchon et que ladite au moins une vis est fixée directement sur ledit bouchon.

8. Dispositif selon la revendication 1, **caractérisé en ce qu'**il comprend des moyens de protection de ladite au moins une vis.

9. Dispositif selon les revendications 6 et 8, dans lequel lesdits moyens de protection de ladite au moins une vis comprennent au moins un couvercle (30) pour fermer ladite portion (12) de logement dudit capuchon (10).

10. Dispositif selon la revendication 9, dans lequel ledit couvercle (30) comprend au moins un trou traversant (33) pour le passage d'un sceau de sécurité adapté pour éviter le retrait éventuel du couvercle (30) du capuchon (10), ledit capuchon (10) étant pourvu d'au moins un trou traversant (15) disposé dans une position correspondant audit au moins un trou traversant (33) dudit couvercle (30).

11. Dispositif selon l'une quelconque des revendications précédentes, dans lequel ledit capuchon (10) est réalisé en une seule pièce.

12. Dispositif selon l'une quelconque des revendications précédentes, dans lequel ledit capuchon (10) n'est pas déformable.
